Europäisches Patentamt

European Patent Office

Office européen des brevets

(19)

(11) Veröffentlichungsnummer: **0 095 178**
**B1**

(12) **EUROPÄISCHE PATENTSCHRIFT**

(45) Veröffentlichungstag der Patentschrift:
**10.01.90**

(21) Anmeldenummer: **83105086.9**

(22) Anmeldetag: **22.05.83**

(51) Int. Cl.⁴: **G 09 B 5/00,** G 11 B 27/32

(54) **Verfahren zum Protokollieren der in einer elektroakustischen Diskussionsanlage übertragenen Sprechbeiträge.**

(30) Priorität: **24.05.82 DE 3219381**

(43) Veröffentlichungstag der Anmeldung:
**30.11.83 Patentblatt 83/48**

(45) Bekanntmachung des Hinweises auf die Patenterteilung:
**10.01.90 Patentblatt 90/2**

(84) Benannte Vertragsstaaten:
**AT BE CH DE FR GB IT LI NL SE**

(56) Entgegenhaltungen:
**US-A- 3 798 387**
**US-A- 4 122 498**
**US-A- 4 249 041**
**US-A- 4 301 525**

(73) Patentinhaber: **Brähler, Helmut, Kapellenweg 15,**
**5330 Königswinter (DE)**

(72) Erfinder: **Brähler, Helmut, Kapellenweg 15,**
**5330 Königswinter (DE)**

(74) Vertreter: **Lieck, Hans-Peter, Dipl.-Ing. et al,**
**Patentanwalt Lieck Maximiliansplatz 10,**
**D-8000 München 2 (DE)**

## Beschreibung

Verfahren zum Protokollieren der in einer elektroakustischen Diskussionsanlage übertragenen Sprechbeiträge.

Die Erfindung betrifft ein Verfahren zum Protokollieren der in einer elektroakustischen Diskussionsanlage übertragenen Sprechbeiträge, z.B. der Referate und Diskussionsbeiträge, der Teilnehmer einer Konferenz oder dergleichen, nach dem Oberbegriff des Anspruches 1.

Elektroakustische Diskussionsanlagen erleichtern die gegenseitige akustische Verständigung der Teilnehmer einer Diskussion, Konferenz oder dergleichen. Den Teilnehmern stehen mehrere Mikrophone zur Verfügung, die einzeln, meistens von einer Zentrale aus gesteuert, wahlweise eingeschaltet werden. Das gesprochene Wort wird über Lautsprecher oder Kopfhörer hörbar gemacht. Bei Bedarf umfaßt die Diskussionsanlage eine Dolmetschereinrichtung mit mehreren, jeweils für eine Sprache reservierten Tonkanälen, die je nach sprachlicher Konstellation entweder den Original-Beitrag oder die Übersetzung desselben in die betreffende Sprache führen und von den Teilnehmern mittels eines Empfangsgerätes und eines Kopfhörers wahlweise abgehört werden können.

Weiterentwickelte Diskussionsanlagen bieten dem Benutzer darüber hinaus zusätzliche Funktionen. Ursprünglich für die automatische Verarbeitung der Wortmeldungen der Teilnehmer gedacht, umfassen sie einen Speicher, in welchen die Namen und gewünschtenfalls weitere personenbezogene Daten der Teilnehmer einer Veranstaltung sowie korreliert hiermit jeweils ein bestimmter Identifizierungscode eingegeben werden können. Die Namen und/oder gegebenenfalls die anderen personenbezogenen Daten sind mittels des Identifizierungscodes jeweils aus dem Speicher abrufbar und können z.B. an einem Bildschirm in der Reihe der Wortmeldungen angezeigt werden. Bei den Identifizierungscodes kann es sich um Codes der Mikrophone der Diskussionsanlage handeln. Dann muß allerdings durch organisatorische Maßnahmen sichergestellt sein, daß jedem Teilnehmer ein bestimmtes Mikrophon fest zugeordnet ist. Es kann sich aber auch um einen Identifizierungscode des Teilnehmers selber handeln, den dieser bei einer Wortmeldung z.B. mittels eines persönlichen Schlüssels, einer persönlichen Magnetkarte oder über eine Tastatur zum Speicher eingibt. In diesem Falle ist technisch jedenfalls keine feste Bindung des Teilnehmers an ein bestimmtes Mikrophon notwendig.

Bei wichtigen Konferenzen und Seminaren ist heutzutage eine genaue schriftliche Protokollierung der Sprechbeiträge aller Teilnehmer obligatorisch. Hierzu ist es bisher üblich, alle Sprechbeiträge mittels einem oder mehreren an die Diskussionsanlage angeschlossenen Tonaufzeichnungsgeräten aufzuzeichnen. Die Tonaufzeichnungen werden anschließend von einer Bedienungsperson abgehört und niedergeschrieben. Während die lückenlose Tonaufzeichnung aller Sprechbeiträge problemlos möglich ist, bereitet es bisher Schwierigkeiten, die jeweiligen Redner für die Protokollierung eindeutig zu identifizieren. Dies gilt insbesondere für rege Diskussionen mit wiederholten Beiträgen der gleichen Teilnehmer, die sich höchstens einmal bei ihrem ersten Diskussionsbeitrag persönlich unter Namensnennung vorstellen, im weiteren Verlauf aber – zurecht – davon ausgehen, daß sie den übrigen Teilnehmern nun bekannt sind. In solchen Fällen ist die Bedienungsperson, welche die Niederschrift besorgt, darauf angewiesen, die Teilnehmer anhand ihrer Stimme zu erkennen. Dies ist mühsam, wenn nicht unmöglich. Aus diesem Grunde werden wichtige Sitzungen parallel von Stenographen protokolliert oder es wird jedenfalls parallel zur Tonaufzeichnung manuell eine Rednerliste geführt, in welche die Teilnehmer in der Reihenfolge ihres Sprechbeitrages und mit Angabe des jeweiligen Beginns desselben durch Uhrzeit und/oder Stand eines Zählwerkes des Tonaufzeichnungsgerätes eingetragen werden. Dies erfordert eine hohe Konzentration, ist sehr personalintensiv und bietet trotzdem keine Lösung, wenn die Namen von Rednern nicht bekannt sind.

Aus der US-PS 3 798 387 ist es im Rahmen einer Tonaufzeichnung zu stenographischen Zwecken, insbesondere bei Gericht, bereits bekannt, ein zweispuriges Magnetbandgerät zu verwenden, bei dem auf einer Spur der jeweilige Beitrag auf einer zweiten Spur ein Ton einer bestimmten, je nach Redner unterschiedlichen Frequenz als Identifikationscode aufgezeichnet wird. Die Identifikationscodes bzw. -töne werden von mehreren, wahlweise einschaltbaren Oszillatoren erzeugt. Die Einschaltung erfolgt an einer Zentrale von Hand durch Betätigung jeweils einer von mehreren Tasten, die den infrage kommenden Rednern durch organisatorische Maßnahmen einzeln zugeordnet sind. Eine Bedienungsperson, welche die Redner kennt, muß die Tasten entsprechend dem jeweils sprechenden Redner betätigen. Es ist nur ein Mikrophon vorgesehen, das in keiner funktionellen Beziehung zu der Anordnung steht, mit welcher die Identifizierungstöne erzeugt und ausgewählt werden. Die Identifizierungstöne werden fortlaufend auf der Datenspur aufgezeichnet und beim Abhören des Bandes gleichzeitig gelesen. Sie schalten jeweils, abhängig von der Tonhöhe, eines von mehreren Lämpchen ein. Anhand des jeweils eingeschalteten Lämpchens kann die abhörende Bedienungsperson, z.B. die Stenotypistin, den Namen des Redners erkennen, von dem der gerade gehörte Sprechbeitrag stammt, wenn ihr durch organisatorische Maßnahmen, z.B. Anbringung von Namensschildern neben den Lämpchen, die Zuordnung zwischen Lämpchen und Namen bekannt ist.

Die aus der US-PS 3 798 387 bekannte Vorgehensweise erfordert während der Aufnahme die ständige Anwesenheit und Aufmerksamkeit einer Bedienungsperson, die alle Redner kennt und die entsprechende Taste betätigt.

Auch beim Abhören muß durch organisatorische Maßnahmen dafür gesorgt werden, daß der abhörenden Bedienungsperson die für das abgehörte Band jeweils zutreffende Zuordnung zwischen den Namen der Redner und den Lämpchen bekannt ist. Das Ganze erfordert einen hohen manuellen Aufwand und ist dann, wenn eine größere Anzahl von Rednern «verwaltet» werden muß, überhaupt nicht mehr durchführbar, schon weil keine Bedienungsperson für die Betätigung der Tasten zu finden sein dürfte, die alle Redner persönlich kennt.

Der Erfindung liegt dementsprechend die Aufgabe zugrunde, ein verfahren der gattungsgemäßen Art zu schaffen, bei welchem die Identifizierungscodes der jeweils sprechenden Teilnehmer einer Konferenz oder dergleichen ohne Zutun einer Bedienungsperson ermittelt werden und bei dem keine besonderen organisatorischen Maßnahmen notwendig sind, um beim Abhören und Niederschreiben des aufgenommenen Bandes den Namen und etwaige sonstige Daten des jeweils sprechenden Teilnehmers anzuzeigen.

Diese Aufgabe wird erfindungsgemäß mit dem im neuen Anspruch 1 und bezüglich vorteilhafter Ausgestaltungen in den Unteransprüchen gekennzeichneten Verfahren gelöst.

Bei dem erfindungsgemäßen Verfahren wird der Identifizierungscode des jeweils sprechenden Teilnehmers selbsttätig ermittelt, indem mehrere, den Teilnehmern individuell zugeordnete Mikrophone verwendet werden und vom jeweils eingeschalteten Mikrophon ein bestimmter Identifizierungscode ausgeht oder vom Teilnehmer am Mikrophon selbst eingegeben wird. Da man anhand des jeweils ermittelten Identifizierungscodes unmittelbar die zugeordneten personenbezogenen Daten des jeweiligen Teilnehmers auf dem Speicher abfragt und zusammen mit dem Identifizierungscode als Datenpaket auf der Datenspur aufzeichnet, ist es für das Abhören und Niederschreiben der Sprechbeiträge nicht mehr notwendig, die bei der Aufnahme eingehaltene Zuordnung zwischen Identifizierungscodes und personenbezogenen Daten bekanntzugeben. Die personenbezogenen Daten können vielmehr unmittelbar von der Datenspur des Bandes am Datensichtgerät angezeigt werden. Die periodisch wiederholte Aufzeichnung jedes vorzugsweise aus den Daten seriell gebildeten Datenpaketes gewährleistet eine hohe Datensicherheit und befreit von der Notwendigkeit, mit dem Abhören und Niederschreiben eines Sprechbeitrages unbedingt am Anfang desselben einsetzen zu müssen. Das ist z.B. dann interessant, wenn die Aufgabe des Protokollierens auf mehrere Bedienungspersonen aufgeteilt oder eine fertiggestellte Niederschrift nach Rücklauf des Tonträgers an einzelnen Stellen überprüft oder korrigiert werden soll. Es ist sichergestellt, daß auch dann am Datensichtgerät die zum Sprechbeitrag gehörenden Daten richtig angezeigt werden. Die Wiederholungs-Frequenz der Datenpaket-Aufzeichnung braucht hierzu nicht hoch zu sein; eine Wiederholungs-Frequenz von z.B. 0,5 Hertz genügt.

Zweckmäßigerweise wird man bei dem erfindungsgemäßen Verfahren zusätzlich zu den personenbezogenen Daten auch die Uhrzeit des Einschaltens des jeweiligen Mikrophon auf der Datenspur aufzeichnen, um die Konferenz, das Seminar oder dergleichen auch im zeitlichen Verlauf genau schriftlich festhalten zu können.

In diesem Zusammenhang ist aus der US-PS 4 122 498 bereits ein Datenaufzeichnungsgerät bekannt, mit welchem Ereignisdaten, z.B. Meßdaten, auf einer Spur eines Magnetbandgerätes aufgezeichnet werden. Um den zeitlichen Verlauf der Ereignisdaten später rekonstruieren zu können, werden auf einer zweiten, parallelen Spur gleichzeitig Uhrzeit- und Kalenderdaten zusammen mit einem festliegenden Identifizierungscode aufgezeichnet, der das jeweilige Datenaufzeichnungsgerät kennzeichnet. Die Uhrzeit- und Kalenderdaten können bei der Wiedergabe der Aufzeichnung an einem Datensichtgerät angezeigt werden.

Grundsätzlich reicht für die Durchführung des erfindungsgemäßen Verfahrens der Einsatz eines einzigen zweispurigen Tonaufzeichnungsgerätes aus, wenn für die Niederschrift bzw. Protokollierung, die immer länger als die Aufzeichnung dauert, Zeit zur Verfügung steht. Soll andererseits die Niederschrift schon unmittelbar nach Abschluß der Veranstaltung fertig sein, also quasi simultan mit dem Veranstaltungsverlauf angefertigt werden, müssen mehrere Bedienungspersonen gleichzeitig an der Niederschrift arbeiten können. Dies wird in besonders günstiger Weise mit der Ausgestaltung der Erfindung nach Anspruch 3 ermöglicht. Hier arbeitet eine entsprechend große Anzahl Tonaufzeichnungsgeräte in einem Pool. An jedem einzelnen Tonaufzeichnungsgerät wird, unabhängig von der Dauer des jeweiligen Sprechbeitrages, immer nur eine Aufzeichnung von bestimmter, festgelegter Maximaldauer von z.B. fünf Minuten vorgenommen und diese dann erst niedergeschrieben, bevor eine weitere Aufzeichnung am gleichen Tonaufzeichnungsgerät erfolgt. Die Sprechzeit wird also quasi reihum auf mehrere Tonaufzeichnungsgeräte verteilt. Auch hier ist die periodisch wiederholte Aufzeichnung jedes Datenpakets parallel zum Sprechbeitrag besonders vorteilhaft, weil dann trotz der möglicherweise bruchstückhaften Erfassung eines Sprechbeitrages an einem bestimmten Tonaufzeichnungsgerät für die Bedienungsperson der Redner am Datensichtgerät eindeutig angezeigt wird.

Bei der Verteilung der Aufzeichnung auf mehrere Tonaufzeichnungsgeräte ist außerdem eine zeitliche Überlappung der Aufzeichnung an den einzelnen Tonaufzeichnungsgeräten gemäß Anspruch 4 vorteilhaft, um eine lückenlose Aufzeichnung zu gewährleisten und das Zusammenstellen des Protokolls aus den von verschiedenen Bedienungspersonen geschriebenen Teil-Protokollen zu erleichtern. Eine geeignete Überlappungsdauer beträgt z.B. 60 Sekunden.

Am besten werden die mehreren, verteilt arbeitenden Tonaufzeichnungsgeräte für die Aufzeichnung von einer Zentrale aus ferngesteuert. Die Zentrale erhält zu jedem Tonaufzeichnungsgerät eine Meldung über dessen jeweiligen Betriebszustand, d.h. ob es gerade zum Aufzeichnen oder Abhören verwendet wird oder nach abgeschlossenem Abhören (und Protokollieren) eine Aufzeichnung wieder frei ist. Von der Zentrale aus wird dann, gegebenenfalls nach einem bestimmten Plan, ein jeweils freies Tonaufzeichnungsgerät für die Fortsetzung der Aufzeichnung ferngesteuert. Bei mehrsprachigen Veranstaltungen unter Einsatz einer Dolmetschereinrichtung kann bei dieser Verfahrensweise außerdem in einfacher Weise sichergestellt werden, daß jedes Tonaufzeichnungsgerät für eine oder mehrere bestimmte Sprachen reserviert ist, z.B. abgestimmt auf die sprachliche Ausbildung der Bedienungsperson, die an dem Tonaufzeichnungsgerät arbeitet. Dies geschieht in der Ausgestaltung des erfindungsgemäßen Verfahrens gemäß Anspruch 6. On der jeweilige Tonkanal der Dolmetschereinrichtung Original-Sprache oder Übersetzung führt, ist mittels einer hierfür in der Dolmetschereinrichtung sowieso vorhandenen elektronischen Schaltung automatisch erkennbar.

Man kann zur Datenaufzeichnung die zweite Tonspur eines handelsüblichen Zweispur-Tonaufzeichnungsgerätes verwenden. Auf dieser zweiten Tonspur, der Datenspur, kann die Datenaufzeichnung digital durch Umtastung zweier verschiedener NF-Signalfrequenzen von zum Beispiel 1200 und 2400 Hz erfolgen. Bei dieser Datenaufzeichnung kann es jedoch Schwierigkeiten bereiten, die relativ energiereichen Signalfrequenzen auf der zweiten Spur gegenüber den Tonfrequenzen auf der ersten Spur genügend entkoppelt zu bekommen. Dies gilt insbesondere für die einfachen Kassetten-Tonaufzeichnungsgeräte. Hier läßt sich mit der besonders wichtigen Weiterbildung der Erfindung nach den Ansprüchen 7 und 8 in einfacher Weise Abhilfe schaffen. Statt zweier verschiedener Signalfrequenzen, die beide auf einer Tonspur aufgezeichnet werden, wird hier eine einzige, relativ hohe, aber noch im aufzeichenbaren NF-Bereich liegende Signalfrequenz verwendet, die zwischen den beiden Tonspuren des Gerätes umgetastet wird. Mit anderen Worten benutzt man statt zwei verschiedenen Signalfrequenzen auf einer Tonspur eine einzige Signalfrequenz auf zwei Tonspuren. Voraussetzung ist, daß der NF-Bereich der Tonaufzeichnung auf eine obere Grenzfrequenz beschnitten wird, die kleiner als die Signalfrequenz ist. Dies läßt sich jedoch in Diskussionsanlagen, bei denen es nur um Sprachübertragung geht, problemlos und ohne jede Einbuße an Qualität der Sprachübertragung durchführen. Man erreicht so mit einfachen Mitteln eine ausgezeichnete Kanaltrennung zwischen Ton- und Datenaufzeichnung.

Auserdem erhält man den wichtigen Vorteil, daß beide Spuren des Tonaufzeichnungsgerätes für die Aufzeichnung von Sprechbeiträgen zur Verfügung stehen. Deshalb läßt sich das erfindungsgemäße Verfahren in der Ausgestaltung der Ansprüche 9 und 10 ohne Umstellung für den Benutzer auch bei schon vorhandenen Diskussionsanlagen einsetzen, bei denen jeweils zwei Tonkanäle auf den beiden Tonspuren eines Tonaufzeichnungsgerätes aufgezeichnet werden.

Geeignete Werte für die Grenzfrequenz und die Signalfrequenz sind zum Beispiel zirka 8000 Hz und 14000 Hz. Diese Werte lassen sich zum Beispiel mit einfachen Filtern festlegen.

**Patentansprüche**

1. Verfahren zum Protokollieren der in einer elektroakustischen Diskussionsanlage übertragenen Sprechbeiträge der Teilnehmer einer Konferenz oder dergleichen, bei welchem die Sprechbeiträge auf der Tonspur mindestens eines Tonaufzeichnungsgerätes aufgezeichnet und anschließend von einer Bedienungsperson abgehört und schriftlich fixiert werden, bei welchem den Teilnehmern Identifizierungscodes zugeordnet werden, die in einem Speicher gespeichert sind, bei welchem mittels einer Steuerung der dem jeweils sprechenden Teilnehmer zugeordnete Identifizierungscode ermittelt wird, bei welchem ein Tonaufzeichnungsgerät mit einer zusätzlichen, zur Tonspur parallelen Datenspur verwendet wird, bei welchem der jeweils ermittelte Identifizierungscode fortlaufend auf der Datenspur aufgezeichnet wird, und bei welchem beim Abhören der Tonspur gleichzeitig die Daten von der Datenspur gelesen und zur Angabe des Namens des zugeordneten Teilnehmers an einem Datensichtgerät für die Bedienungsperson verwendet werden, dadurch gekennzeichnet, daß man in dem Speicher korreliert mit den Identifizierungscodes die Namen und gegebenenfalls weitere personenbezogene Daten der Teilnehmer speichert, daß man mehrere, den Teilnehmern individuell zugeordnete Mikrophone verwendet und mittels der Steuerung selbsttätig den Identifizierungscode des dem jeweils eingeschalteten Mikrophon zugeordneten Teilnehmers ermittelt, daß man anhand des jeweils ermittelten Identifikationscodes die zugeordneten personenbezogenen Daten aus dem Speicher abfragt, daß man die Identifizierungscodes und die personenbezogenen Daten gemeinsam zusammen mit einer Anfangs- und einer Endkennung als Datenpaket auf der Datenspur aufzeichnet, daß man jedes Datenpaket periodisch wiederholt und bis zur Ausgabe eines anderen Identifikationscodes aus dem Speicher aufzeichnet, und daß man auf dem Datensichtgerät die von der Datenspur gelesenen personenbezogenen Daten anzeigt.

2. Verfahren nach Anspruch 1, dadurch gekennzeichnet, daß man in jedem Datenpaket zusätzlich die Uhrzeit des Einschaltens des jeweiligen Mikrophons aufzeichnet.

3. Verfahren nach Anspruch 1 oder 2, dadurch gekennzeichnet, daß man mehrere an die Diskussionsanlage angeschlossene Tonaufzeichnungsgeräte in Betriebsbereitschaft hält, daß man auf jedem Tonaufzeichnungsgerät nur eine Aufzeichnung von bestimmter, festgelegter Maximaldauer vornimmt und diese Aufzeichnung erst am gleichen Tonaufzeichnungsgerät abhört und schriftlich fixiert, bevor man das Tonaufzeichnungsgerät erneut zur Aufzeichnung verwendet.

4. Verfahren nach Anspruch 3, dadurch gekennzeichnet, daß man ein zur Fortsetzung der Aufzeichnung vorgesehenes Tonaufzeichnungsgerät mit einem bestimmten, festgelegten zeitlichen Vorlauf vor Erreichen der Maximaldauer der Aufzeichnung des gerade aufzeichnenden Tonaufzeichnungsgerätes zur Aufzeichnung in Betrieb nimmt.

5. Verfahren nach Anspruch 3 oder 4, dadurch gekennzeichnet, daß man den jeweiligen Betriebszustand (Aufzeichnen, Abhören, Frei) der Tonaufzeichnungsgeräte an eine Zentrale meldet und von dieser die Tonaufzeichnungsgeräte für die Aufzeichnung fernsteuert.

6. Verfahren nach Anspruch 5 unter Anwendung einer Diskussionsanlage, die eine Dolmetschereinrichtung mit mehreren, jeweils für eine Sprache reservierten Tonkanälen umfaßt, dadurch gekennzeichnet, daß man jedes Tonaufzeichnungsgerät einem oder mehreren bestimmten Tonkanälen fest zuordnet und zur Aufzeichnung von einem zugeordneten Tonkanal nur verwendet, wenn der betreffende Tonkanal die Sprache, für die er reserviert ist, im Original führt.

7. Verfahren nach einem der Ansprüche 1 bis 6, bei welchem Sprechbeiträge der Teilnehmer simultan auf zwei parallelen Tonspuren eines Tonaufzeichnungsgerätes aufgezeichnet werden, dadurch gekennzeichnet, daß man den Frequenzumfang der den beiden Tonspuren zugeordneten Tonkanäle der Diskussionsanlage bei einer oberen Grenzfrequenz beschneidet und die oberhalb der Grenzfrequenz liegenden NF-Frequenzbereiche beider Tonspuren gemeinsam als Datenspur verwendet, auf welcher die Datenaufzeichnung durch Umtastung einer einzigen, oberhalb der Grenzfrequenz liegenden Signalfrequenz zwischen den beiden Tonspuren erfolgt.

8. Verfahren nach Anspruch 7, dadurch gekennzeichnet, daß man mit einer oberen Grenzfrequenz von etwa 8000 Hz und einer Signalfrequenz von etwa 14000 Hz arbeitet.

**Claims**

1. Method for minuting the spoken contributions of participants at a conference or the like, broadcast in an electroacoustic discussion installation, in which the spoken contributions are recorded on the sound track of at least one sound recording apparatus, and are then listened to by an operator and laid down in written form, in which identification codes are given to the participants, which codes are stored in a memory, in which by means of a control the identification code allocated to the participant who is speaking in each case is determined, in which a sound recording apparatus having an additional data track parallel to the sound track is used, in which the respectively determined identification code is continuously recorded on the data track, and in which on listening to the sound track at the same time the data are read from the data track and are used to indicate the name of the associated participant on a visual display unit for the operator, characterized in that in the memory, correlated with the identification codes, the names and if required further personal data of the participants are stored, that a plurality of microphones are used, which are assigned individually to the participants, and by means of the control automatically the identification code of the participant allocated to the microphone which is connected in in each case is determined, that by means of the respectively determined identification code the associated personal data are called up from the memory, that the identification codes and the personal data are jointly recorded, together with a start- and finish-marker, as a data packet on the data track, that each data packet is periodically repeated and recorded until another identification code is emitted from the memory, and that the personal data read from the data track are indicated on the visual display unit.

2. Method according to Claim 1, characterized in that in each data packet in addition the time at which the respective microphone is connected in is recorded.

3. Method according to Claim 1 or 2, characterized in that a plurality of sound recording apparatus, connected to the discussion installation, are held in readiness for operation, that on each sound recording apparatus only one recording of a particular, established maximum duration is made and this recording is only listened to on the same sound recording apparatus and laid down in written form, before the sound recording apparatus is used again for recording.

4. Method according to Claim 3, characterized in that a sound recording apparatus is put into operation for recording, which is provided to continue the recording, having a particular, established time lead before reaching the maximum duration of the recording of the sound recording apparatus which is just recording.

5. Method according to Claim 3 or 4, characterized in that the respective state of operation (recording, listening, free) of the sound recording apparatus is reported to a control centre and from the latter the sound recording apparatus for recording are remote-controlled.

6. Method according to Claim 5 using a discussion installation which comprises an interpreting facility with several sound channels reserved in each case for one language, characterized in that each sound recording apparatus is permanently allocated to one or more particular sound channels and is only used for recording from an allocated sound channel, when the relevant sound channel carries the language, for which it is reserved, in the original.

7. Method according to one of Claims 1 to 6, in which spoken contributions of the participants are recorded simultaneously on two parallel sound tracks of a sound recording apparatus, characterized in that the frequency coverage of the sound channels of the discussion installation, associated with the two sound tracks, is cut at an upper threshold frequency and the a.f. frequency ranges of the two sound tracks, lying above the threshold frequency, are used together as a data track, on which the data recording takes place by lobeswitching a single signal frequency lying above the threshold frequency between the two sound tracks.

8. Method according to Claim 7, characterized in that operations are carried out with an upper threshold frequency of approximately 8000 Hz and a signal frequency of approximately 14000 Hz.

**Revendications**

1. Procédé pour établir un compte-rendu des interventions transmises par des moyens électroacoustiques lors d'une discussion par les participants d'une conférence ou similaires, dans lequel les interventions sont enregistrées sur la piste sonore d'au moins un appareil d'enregistrement du son et ensuite écoutées par une personne de service et fixées par écrit, procédé dans lequel des codes d'identification sont affectés aux participants et stockés dans une mémoire, procédé dans lequel on détermine à l'aide d'une commande le code d'identification affecté à chaque participant en train de parler, dans lequel on utilise un appareil d'enregistrement du son comportant une piste de données supplémentaire parallèle à la piste sonore, pour lequel le code d'identification qui est chaque fois déterminé est enregistré sur la piste de données, et dans lequel lors de l'écoute de la piste sonore les données sont lues simultanément sur la piste de données et utilisées pour indiquer, sur un appareil de visualisation des données, à une personne de service, le nom du participant affecté, caractérisé en ce qu'on stock dans la mémoire corrélée au code d'identification les noms et le cas échéant d'autres données relatives à la personne participante, en ce qu'on utilise plusieurs microphones affectés individuellement aux participants et qu'on détermine automatiquement, à l'aide de la commande, le code d'identification du participant affecté au microphone qui est chaque fois connecté, en ce qu'à l'aide du code d'identification chaque fois déterminé on interroge dans la mémoire les données relatives à la personne, en ce qu'on enregistre ensemble sur la piste de données, avec un indice de début et un indice de fin, sous forme de paquet de données, le code d'identification et les données relatives à la personne, en ce qu'on répète périodiquement chaque paquet de données et qu'on l'enregistre jusqu'à la délivrance d'un autre code d'identification par la mémoire, et en ce qu'on affiche, sur l'appareil de visualisation des données, les données relatives à la personne qui sont lues sur la piste de données.

2. Procédé selon la revendication 1, caractérisé en ce qu'on enregistre en plus chaque paquet de données l'heure de la connexion de chaque microphone.

3. Procédé selon la revendication 1 ou 2, caractérisé en ce qu'on maintient prêts à fonctionner plusieurs appareils d'enregistrement du son raccordés à l'installation de discussion, en ce qu'on entreprend sur chaque appareil d'enregistrement du son un seul enregistrement d'une durée maximale déterminée et fixée et qu'on écoute cet enregistrement ensuite sur le même appareil d'enregistrement du son et qu'on le fixe par écrit avant d'utiliser à nouveau l'appareil pour l'enregistrement du son.

4. Procédé selon la revendication 3, caractérisé en ce que fait fonctionner en enregistrement un appareil d'enregistrement du son prévu pour continuer l'enregistrement, avec une allure déterminée et fixée, avant d'atteindre la durée maximale de l'enregistrement de l'appareil justement en train d'enregistrer.

5. Procédé selon la revendication 3 ou 4, caractérisé en ce qu'on affiche sur un central l'état de fonctionnement respectif (enregistrement, écoute, attente) des appareils d'enregistrement du son et qu'on commande à distance à partir de celui-ci les appareils d'enregistrement du son en vue de l'enregistrement.

6. Procédé selon la revendication 5 utilisant une installation de discussion comprenant un dispositif de traduction à plusieurs canaux sonores, chacun réservé à une langue, caractérisé en ce qu'on affecte chaque appareil d'enregistrement du son à un ou plusieurs canaux sonores déterminés et qu'il n'est utilisé pour l'enregistrement d'un canal sonore affecté que si le canal sonore concerné véhicule l'original de la langue pour lequel il est réservé.

7. Procédé selon l'une des revendications 1 à 6 dans lequel les interventions des participants sont enregistrées simultanément sur deux pistes sonores parallèles d'un appareil d'enregistrement du son, caractérisé en ce qu'on découpe la zone de fréquence des canaux sonores de l'installation de discussion affectés aux deux pistes sonores pour une fréquence limite supérieure et qu'on utilise ensemble comme piste de données les plages de fréquence basses des deux pistes sonores qui sont situées au-dessus de la fréquence limite, piste sur laquelle l'enregistrement des données s'effectue entre les deux pistes, par balayage d'une fréquence de signal unique, située au-dessus de la fréquence limite.

8. Procédé selon la revendication 7, caractérisé en ce qu'on travaille avec une fréquence limite supérieure d'à peu près 8000 Hz et une fréquence de signal d'à peu près 14000 Hz.